# EUROPEAN PATENT APPLICATION

(11) **EP 3 133 012 A1**
(43) Date of publication of application: **22.02.2017**
(21) Application number: 15796435.4
(22) Date of filing: 19.05.2015
(51) Int. Cl.: B63B 35/79

(54) **INFLATABLE SUP BOARD**

(30) Priority: 20.05.2014 KR 20140060434
(71) Applicant: Woosung I.B. Co. Ltd., Incheon 403-858 (KR)
(72) Inventor: LEE, Hee jae, Incheon 403-762 (KR); LIM, Lee young, Incheon 405-794 (KR)
(74) Representative: dompatent von Kreisler Selting Werner - Partnerschaft von Patent- und Rechtsanwälten mbB
(86) International application number: PCT/KR2015/004985
(87) International publication number: WO 2015/178654

(57) **Abstract**

The present invention relates to an inflatable stand up paddle (SUP) board that has a separate air chamber formed therein in addition to a tube that forms a main body, thereby achieving more enhanced safety, and conforms to national safety regulations. The SUP board comprises: a main body that is formed in the shape of a long plate and has a plurality of shape maintaining lines, each having opposite ends coupled to upper and lower internal surfaces, and a first air injection port installed on the front side of the upper surface thereof; a side sheet air-tightly bonded to the main body along the outer periphery thereof to form an air tube along with the main body; and an inner tube that is provided on the outer periphery of the main body and has a second air injection port installed on the outer surface of the side sheet to allow air to be injected thereinto, wherein the outer surface of the inner tube is attached to the internal surface of the side sheet.

## Description

### [Technical Field]

The present invention relates to an inflatable stand up paddle (SUP) board, and more particularly, to an inflatable SUP board including a separate air chamber as well as a tube forming a main body to improve safety and to conform to national safety regulations.

### [Background Art]

Recently, the number of people who enjoy leisure activities and leisure sports has increased according to the improved standard of living. Particularly, a stand up paddle (SUP) board is a representative sport among water-related leisure sports. The SUP board may be used to enjoy touring, kayaking, surfing or wind surfing.

The SUP board may be used in various manners such as standing up on a board plate or lying down on the board plate to ride waves. In general, a SUP board has a considerable volume having a length of about 1.5 to 4.5m, a width of about 50 to 100cm, and a thickness of about 7 to 15cm. A conventional SUP board is manufactured using wood, and thus a weight thereof is over 50kg. Accordingly, it is difficult to store and transport the SUP board.

To this end, a polyurethane board for surfing has been introduced. However, since the surfing board must have a predetermined size, there is a limitation on the ability to reduce the weight thereof. Since polyurethane is a hardened material, it is still difficult to store and transport the board.

Furthermore, according to the increased popularity of leisure activities, simple surfing, which may be enjoyed at a water play area in an amusement park, is introduced as well as professional surfing or wind surfing. However, it is unsuitable to use a conventional surfing board at such facilities.

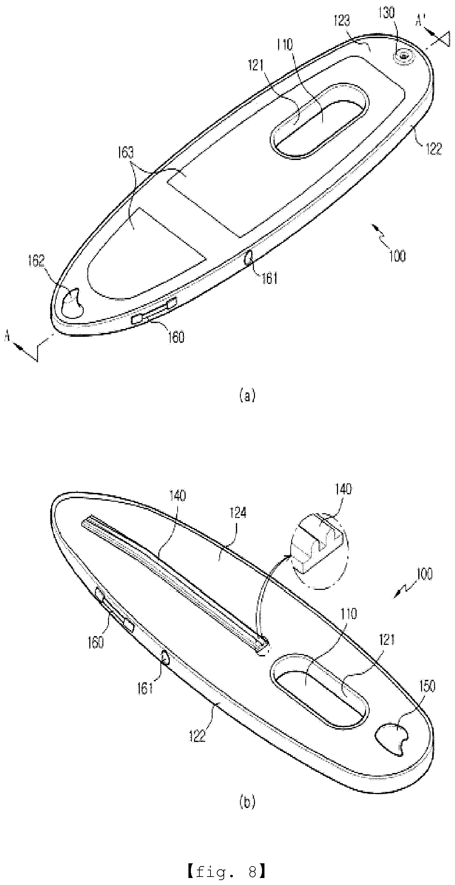

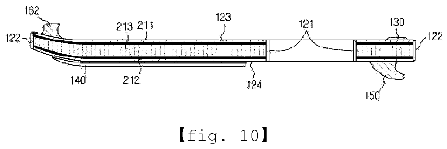

To solve the described-above problems, Korean laid-open patent publication NO. 2009-0128770 entitled "inflatable board for surfing" is disclosed. Hereinafter, the configuration thereof will be described with reference to the accompanying FIGS. 8 to 10.

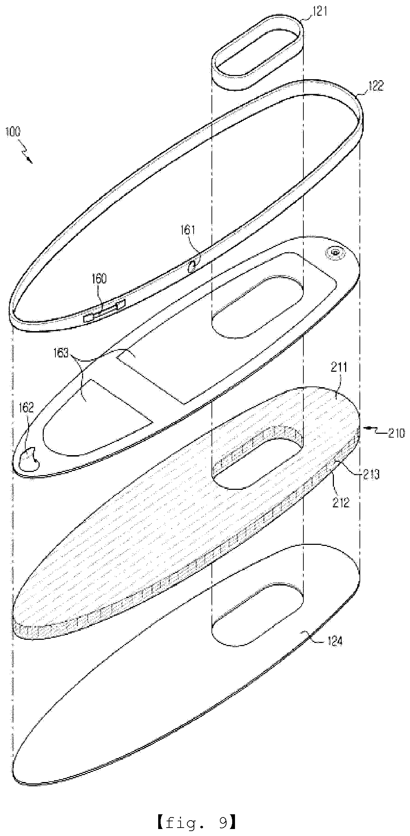

As illustrated in FIGS. 8 to 10, the conventional inflatable surfing board 100 includes an outer part including a cavity 110, an upper sheet 123, a lower sheet 124, a cavity side sheet 121 and an outer side sheet 122, and an inner part 210 disposed in the outer part as illustrated in FIG. 9.

Air is injected into the conventional board 100 through an air inlet 130 such that the conventional board 100 has buoyancy. The outer part includes the upper sheet 123, the lower sheet 124, the cavity side sheet 121, and the outer side sheet 122. The outer part forms the appearance of the board 100 while preventing water from penetrating into the board 100 and preventing internal air from leaking outside. The outer part is formed of a flexible material so as to be foldable after air is discharged therefrom.

As the board 100 has sufficient pressure to support the weight of a rider on the board, the material of the outer part is selected to support the pressure. The outer part, which is capable of maintaining its shape and is waterproof and/or flexible, may be manufactured using polyvinyl chloride (PVC), polyester, and nylon.

A rubbing part 140 is selectively provided at the lower surface of the board 100 to protect the lower sheet 124 and to improve strength and safety, or to improve speed and stability by guiding water current when surfing. The rubbing part 140 may be manufactured using a rubber forming material.

The inner part 210 is disposed at an inside of the board 100. The inner part 210 includes an upper surface 211, a lower surface 212, and a supporting line 213 connecting the upper surface 211 to the lower surface 212. Furthermore, the upper surface 211, the lower surface 212, and the supporting line 213 are weaved by fiber while being formed in an integrated manner. As the upper surface 211 and the lower surface 212 are connected by the supporting line 213, when air is injected, the upper surface 211 and the lower surface 212 may not be curvedly swollen upwards and downwards, respectively, whereby flatness is maintained.

However, the conventional case has the following problems.

The conventional inflatable SUP board is formed a single tube, and thus an accident with casualties may be caused when the tube bursts.

In preparation for an accident occurs in water-related leisure sports, in the case where at least two air chambers is not provided, manufacture and sale may be prohibited by national safety regulations.

### [Disclosure]

### [Technical Problem]

Therefore, the present invention has been made in view of the above problems.

It is an object of the present invention to provide an inflatable SUP board in which a separate air chamber as well as a tube forming a main body is formed, thereby improving safety and conforming to national safety regulations.

### [Technical Solution]

In accordance with an aspect of the present invention, the above and other objects can be accomplished by the provision of an inflatable SUP board including a main body including a plurality of shape maintaining lines coupled to both ends between upper and lower inner surfaces of the main body, the main body formed to have a long plate shape, the main body having a first air inlet at a front upper surface, a side sheet attached along an outer circumference of the main body to encapsulate the main body to form an air tube with the main body and the side sheet, and an inner tube disposed at the outer circumference of the main body, the inner tube having an outer surface attached at an inner surface of the side sheet 20, the inner tube having a second air inlet disposed at the outer surface of the side sheet to inject air thereinto.

In addition, according to the present invention, the inner tube of the inflatable SUP board may have a ring shape along the outer circumference of the main body.

In addition, according to the present invention, the inner tube of the inflatable SUP board may be formed of polyvinyl chloride (PVC) or polyurethane.

In accordance with another aspect of the present invention, the above and other objects can be accomplished by the provision of an inflatable SUP board including a main body including a plurality of shape maintaining lines coupled to both ends between upper and lower inner surfaces of the main body, the main body formed to have a long plate shape, the main body having a first air inlet at a front upper surface, a side sheet attached along an outer circumference of the main body to encapsulate the main body to form an air tube with the main body and the side sheet, and an outer sheet surrounding the side sheet, the outer sheet attached to the outer circumference of the main body to form a hollow space at an outside of the side sheet, the outer sheet having a third air inlet, which is exposed.

In addition, according to the present invention, the outer sheet of the inflatable SUP board may have a ring shape along the outer circumference of the side sheet.

In addition, according to the present invention, the outer sheet of the inflatable SUP board may be formed of the same material as the side sheet.

### [Advantageous Effects]

As described above, according to the present invention, a separated air chamber as well as a tube forming a main body is formed, thereby improving safety.

### [Description of Drawings]

FIG. 1 is a perspective view of a SUP board according to the present invention;
FIG. 2 is a plan view of the SUP board according to the present invention;
FIG. 3 is a cross-sectional view taken along line A-A of FIG. 2;
FIG. 4 is a cross-sectional view taken along line B-B of FIG. 2;

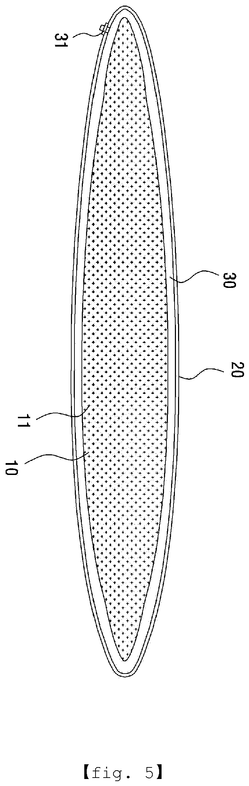

FIG. 5 is a plan view of the SUP board according to the present invention;
FIG. 6 is a perspective view of a SUP board according to another embodiment of the present invention;
FIG. 7 is a longitudinal cross-sectional view of the embodiment illustrated in FIG. 6;
FIG. 8 is a perspective view illustrating a conventional inflatable surfing board;
FIG. 9 is an exploded perspective view of the conventional inflatable surfing board; and
FIG. 10 is a longitudinal cross-sectional view of the conventional inflatable surfing board.

### [Best Mode]

Preferred embodiments of the invention will be described below in more detail with reference to the drawings shown below. However, the invention may be embodied in many different forms, it is to be understood not limited to the described embodiments.

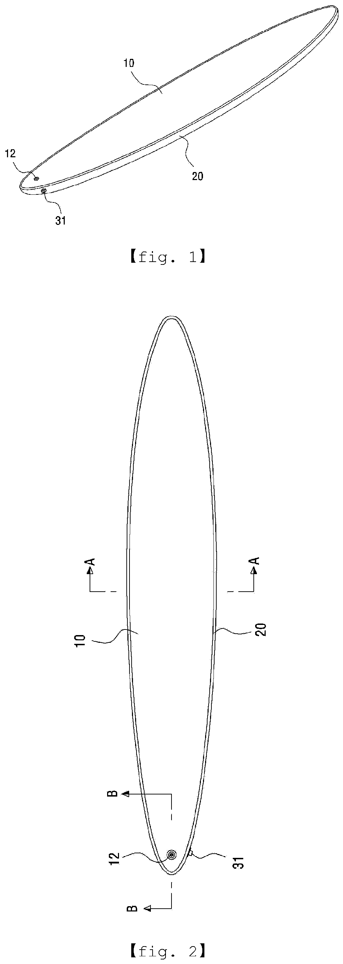

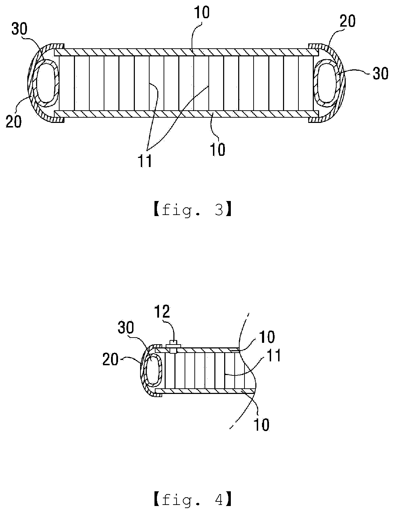

FIG. 1 is a perspective view of a SUP board according to the present invention. FIG. 2 is a plan view of the SUP board according to the present invention. FIG. 3 is a cross-sectional view taken along line A-A of FIG. 2. FIG. 4 is a cross-sectional view taken along line B-B of FIG. 2.

As illustrated, the inflatable stand up paddle (SUP) board according to the present invention includes a main body 10 including shape maintaining lines 11, a side sheet 20 attached to a circumference of the main body 10, and an inner tube 30 attached to an inside of the side sheet 20.

The main body 10 includes a plurality of the shape maintaining lines 11 coupled to both ends of the main body 10 between upper and lower inner surfaces of the main body 10. The main body 10 has a long plate type. A first air inlet 12 is formed at a front upper surface of the main body 10. An outer surface of the main body 10 is encapsulated by the side sheet 20 to form an air tube and air is injected therein, whereby the SUP board floats on water and a space where a person is capable of riding is provided.

The shape maintaining lines 11 are interconnected between the inner surfaces of the main body 10 to allow the main body 10 to maintain a uniform flat shape. The shape maintaining lines 11 are publicly known. Attaching the shape maintaining lines 11 to the inner surfaces of the main body 10 to maintain the shape of the main body 10 is referred to as a "drop stitch material" in the relevant field.

The first air inlet 12 is capable of injecting or discharging air into or from the air tube formed by the main body 10 and the side sheet 20. The first air inlet 12 is publicly known.

The side sheet 20 adheres along an outer circumference of the main body 10 to encapsulate the main body 10. The side sheet 20 encapsulates the outside of the main body 10 so that the side sheet 20 and the main body 10 function as a single air tube.

The inner tube 30 is disposed at the outer circumference of the main body 10. An outside of the inner tube 30 is attached to the inside of the side sheet 20. A second air inlet 31 is formed at the outside of the side sheet 20 to inject air therein. A separate space filled with air is formed in the air tube formed by the inside of the side sheet 20 along the outer circumference of the main body 10, namely, by the main body 10 and the side sheet 20. Thus, even if the main body 10 bursts, the inner tube 30 allows the main body 10 to float, thereby minimizing incidence of accidents.

The second air inlet 31 disposed at the outside of the side sheet 20 is capable of injecting or discharging air into or from the inner tube 30. The second air inlet 31 is publicly known.

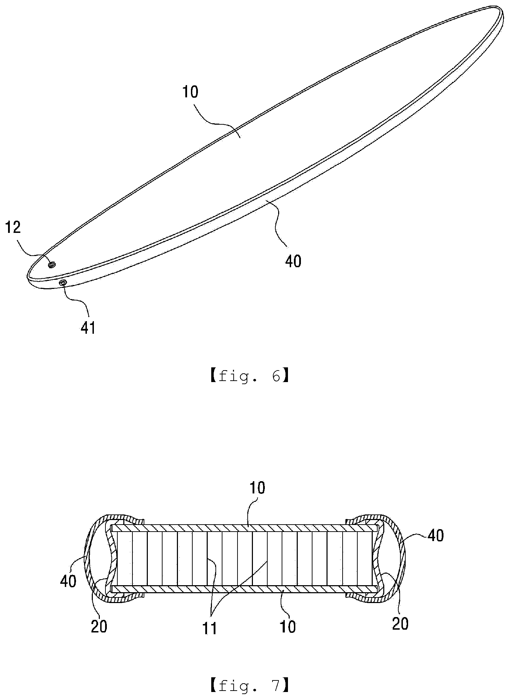

The inner tube 30 may be provided to have a ring shape along the outer circumference of the main body 10. Even if air leaks from the main body 10, the inner tube 30 filled with air has the ring shape which is disposed along the outer circumference to form one floating body (see FIG. 6).

The inner tube 30 functioning as the floating body may be formed of polyvinyl chloride or polyurethane for convenience of manufacture.

FIG. 6 is a perspective view of a SUP board according to another embodiment of the present invention. FIG. 7 is a longitudinal cross-sectional view of the embodiment illustrated in FIG. 6.

As illustrated, the inflatable SUP board according to another embodiment of the present invention includes a main body 10 including shape maintaining lines 11, a side sheet 20 attached to a circumference of the main body 10, and an outer sheet 40 attached to the circumference of the main body 10 along a circumference of the side sheet 20.

The main body 10 includes a plurality of the shape maintaining lines 11 coupled to both ends of the main body 10 between upper and lower inner surfaces of the main body 10. The main body 10 has a long plate type. A first air inlet 12 is formed at a front upper surface of the main body 10. An outer surface of the main body 10 is encapsulated by the side sheet 20 to form an air tube and air is injected therein, whereby the SUP board floats on water and a space where a person is capable of riding is provided.

The shape maintaining lines 11 are interconnected between the inner surfaces of the main body 10 to allow the main body 10 to maintain a uniform flat shape. The shape maintaining lines 11 are publicly known. Attaching the shape maintaining lines 11 to the inner surfaces of the main body 10 to maintain the shape of the main body 10 is referred to as a "drop stitch material" in the relevant field.

The first air inlet 12 is capable of injecting or discharging air into or from the air tube formed by the main body 10 and the side sheet 20. The first air inlet 12 is publicly known.

The side sheet 20 adheres along an outer circumference of the main body 10 to encapsulate the main body 10. The side sheet 20 encapsulates the outside of the main body 10 so that the side sheet 20 and the main body 10 function as a single air tube.

The outer sheet 40 surrounds the side sheet 20 while being attached along the outer circumference of the main body 10 to form a hollow space at the outside of the side sheet 20. The outer sheet 40 has a third air inlet 41 to be exposed. Air is injected into the hollow space, which is along the outer circumference of the main body 10. Thus, even if the main body 10 bursts, the hollow space allows the main body 10 to float, thereby minimizing incidence of accidents.

The third air inlet 41 is capable of injecting or discharging air into or from the hollow space in the outer sheet 40 at the outside of the outer sheet 40, namely, the hollow space formed by the outer sheet 40 and the side sheet 20.

The outer sheet 40 may have a ring shape, which is disposed along the outer circumference of the side sheet 20. Even if air leaks from the main body 10, the hollow space filled with air while being formed by the outer sheet 40 along the circumference of the main body 10 is formed to have a ring shape to thus form one floating body.

The outer sheet 40 may be formed of the same material as the side sheet 20 for convenience of manufacture.

Although a preferred embodiment of the invention above. The invention can use a variety of changes and modifications and equivalents. It is clear that the invention is applicable in the same manner by appropriately modifying the above embodiments. Thus, the disclosure is not intended to limit the scope of the invention as defined by the limitations of the claims.

Meanwhile, the invention has been shown and described with respect to specific embodiments, various modifications are possible within the limits that do not depart from the scope of the present invention will be apparent to a person skilled in the art.

## Claims

1. An inflatable SUP board comprising:
a main body 10 comprising a plurality of shape maintaining lines 11 coupled to both ends between upper and lower inner surfaces of the main body 10, the main body 10 formed to have a long plate shape, the main body 10 having a first air inlet 12 at a front upper surface;
a side sheet 20 attached along an outer circumference of the main body 10 to encapsulate the main body 10 to form an air tube with the main body 10 and the side sheet 20; and
an inner tube 30 disposed at the outer circumference of the main body 10, the inner tube 30 having an outer surface attached at an inner surface of the side sheet 20, the inner tube having a second air inlet 31 disposed at the outer surface of the side sheet 20 to inject air thereinto.

2. The inflatable SUP board according to claim 1, wherein the inner tube 30 has a ring shape along the outer circumference of the main body 10.

3. The inflatable SUP board according to claim 1, wherein the inner tube 30 is formed of polyvinyl chloride (PVC) or polyurethane.

4. An inflatable SUP board comprising:
a main body 10 comprising a plurality of shape maintaining lines 11 coupled to both ends between upper and lower inner surfaces of the main body 10, the main body 10 formed to have a long plate shape, the main body 10 having a first air inlet 12 at a front upper surface;
a side sheet 20 attached along an outer circumference of the main body 10 to encapsulate the main body 10 to form an air tube with the main body 10 and the side sheet 20; and
an outer sheet 40 surrounding the side sheet 20, the outer sheet 40 attached to the outer circumference of the main body 10 to form a hollow space at an outside of the side sheet 20, the outer sheet 40 having a third air inlet 41, which is exposed.

5. The inflatable SUP board according to claim 4, wherein the outer sheet 40 has a ring shape along the outer circumference of the side sheet 20.

6. The inflatable SUP board according to claim 4, wherein the outer sheet 40 is formed of the same material as the side sheet 20.
